# EUROPEAN PATENT SPECIFICATION

(11) **EP 4 391 130 B1**
(45) Date of publication and mention of the grant of the patent: **27.05.2026**
(21) Application number: 23209834.3
(22) Date of filing: 14.11.2023
(51) Int. Cl.: H01M 10/04, H01M 10/0585, H01M 10/42, H01M 10/48, H01M 50/50, H01M 50/543, H01M 50/569, H01M 50/586

(54) **POWER STORAGE MODULE**
STROMSPEICHERMODUL
MODULE DE STOCKAGE D'ÉNERGIE

(30) Priority: 22.12.2022 JP 2022205797
(43) Date of publication of application: 26.06.2024
(73) Proprietor: TOYOTA JIDOSHA KABUSHIKI KAISHA, Toyota-shi, Aichi-ken, 471-8571 (JP)
(72) Inventor: NAKAYAMA, Hiroyuki, Toyota-shi, 471-8571 (JP); OKAMOTO, Yuki, Kariya-shi, 448-8671 (JP); ISHIGURO, Fumihiko, Kariya-shi, 448-8671 (JP); HIROSE, Takayuki, Kariya-shi, 448-8671 (JP)
(74) Representative: D Young & Co LLP

(56) References cited:
- JP-A- 2022 003 627
- US-A1- 2020 028 145

## Description

### CROSS REFERENCE TO RELATED APPLICATIONS

This nonprovisional application is based on Japanese Patent Application No. 2022-205797 filed on December 22, 2022, with the Japan Patent Office.

### BACKGROUND

### Field

The present disclosure relates to a power storage module.

### Description of the Background Art

Japanese Patent Laying-Open No. 2022-37493 discloses a power storage device that includes a plurality of power storage modules and a plurality of conductive plates. Each of the conductive plates is disposed between mutually adjacent power storage modules. JP 2022 003627 A discusses a power storage module. US 2020/028145 A1 discusses a secondary battery and secondary battery control method.

### SUMMARY

In the power storage device described in Japanese Patent Laying-Open No. 2022-37493, in order to detect a voltage of each power storage module, it can be considered to connect a voltage detection terminal to each conductive plate connected to an outermost layer of the power storage module. However, since each conductive plate is a current path of the power storage module, a measurement accuracy of a voltage is decreased due to the influence of a voltage drop between the power storage module and the conductive plate.

The objective of the present disclosure is to provide a power storage module capable of suppressing a decrease in a measurement accuracy of a voltage.

A power storage module according to one aspect of the present disclosure includes a plurality of mutually stacked bipolar electrodes, a positive terminal electrode disposed on one side of the plurality of bipolar electrodes in a stacking direction of the plurality of bipolar electrodes, a negative terminal electrode disposed on another side of the plurality of bipolar electrodes in the stacking direction, a positive electrode current collector plate disposed to be stacked on the positive terminal electrode so as to make contact via a positive electrode side conductive adhesive material or directly with a surface of the positive terminal electrode on an opposite side to a surface facing the bipolar electrodes in the stacking direction, and electrically connected to the positive terminal electrode, a negative electrode current collector plate disposed to be stacked on the negative terminal electrode so as to make contact via a negative electrode side conductive adhesive material or directly with a surface of the negative terminal electrode on an opposite side to a surface facing the bipolar electrodes in the stacking direction, and electrically connected to the negative terminal electrode, a positive electrode side short circuit member with one end thereof connected to the positive terminal electrode and another end thereof connected to the positive electrode current collector plate, the positive electrode side short circuit member electrically connecting the positive terminal electrode and the positive electrode current collector plate, and a negative electrode side short circuit member with one end thereof connected to the negative terminal electrode and another end thereof connected to the negative electrode current collector plate, the negative electrode side short circuit member electrically connecting the negative terminal electrode and the negative electrode current collector plate, in which the positive electrode current collector plate has a positive electrode side voltage detection portion provided at a position not overlapping the positive terminal electrode in the stacking direction, the other end of the positive electrode side short circuit member is connected to the positive electrode side voltage detection portion, the negative electrode current collector plate has a negative electrode side voltage detection portion provided at a position not overlapping the negative terminal electrode in the stacking direction, and the other end of the negative electrode side short circuit member is connected to the negative terminal electrode and the negative electrode side voltage detection portion.

The foregoing and other objects, features, aspects and advantages of the present disclosure will become more apparent from the following detailed description of the present disclosure when taken in conjunction with the accompanying drawings.

### BRIEF DESCRIPTION OF THE DRAWINGS

Fig. 1 is a plan view schematically showing a power storage module in an embodiment of the present disclosure.
Fig. 2 is a cross-sectional view taken along II-II line in Fig. 1.
Fig. 3 is a cross-sectional view schematically showing a modified example of a power storage module.

### DESCRIPTION OF THE PREFERRED EMBODIMENTS

An embodiment of the present disclosure will be described with reference to the figures. Note that, the same reference numerals are attached to same or corresponding members within the figures referred to hereinafter.

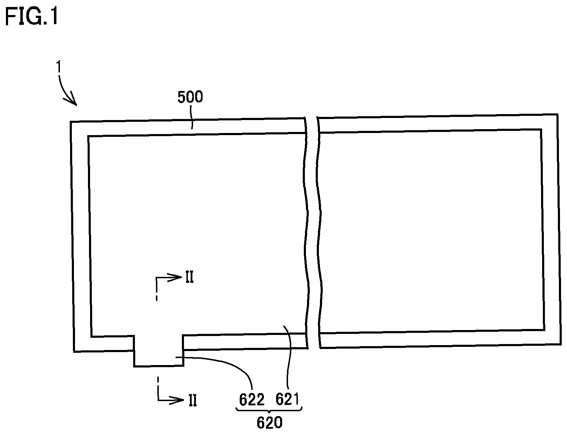

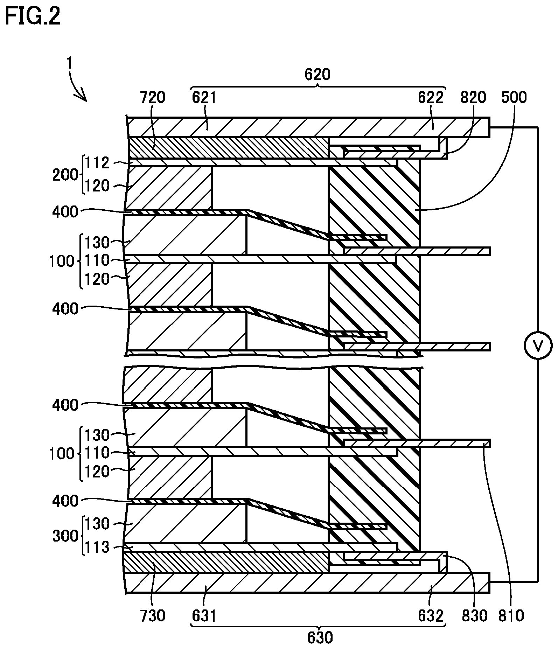

Fig. 1 is a plan view schematically showing a power storage module in an embodiment of the present disclosure. Fig. 2 is a cross-sectional view taken along II-II line in Fig. 1. As shown in Fig. 1 and Fig. 2, a power storage module 1 includes a plurality of bipolar electrodes 100, a positive terminal electrode 200, a negative terminal electrode 300, a plurality of separators 400, a sealing portion 500, a positive electrode current collector plate 620, a negative electrode current collector plate 630, a positive electrode side conductive adhesive material 720, a negative electrode side conductive adhesive material 730, an inner voltage detection portion 810, a positive electrode side short circuit member 820, and a negative electrode side short circuit member 830.

Plurality of bipolar electrodes 100 are mutually stacked. Each bipolar electrode 100 has a current collector 110, a positive electrode active material layer 120, and a negative electrode active material layer 130.

Current collector 110 is made of metal, and is, for example, formed in a rectangular shape. Current collector 110 has a positive electrode current collector foil (illustration omitted) and a negative electrode current collector foil (illustration omitted). The positive electrode current collector foil is, for example, made of aluminum. The negative electrode current collector foil is, for example, made of copper foil. The negative electrode current collector foil is adhered to the positive electrode current collector foil by a conductive adhesive.

Positive electrode active material layer 120 is provided on one surface in current collector 110, namely, on the surface of the positive electrode current collector foil. Negative electrode active material layer 130 is provided on the other surface in current collector 110, namely, on the surface of the negative electrode current collector foil.

Plurality of bipolar electrodes 100 are stacked such that positive electrode active material layer 120 in one of bipolar electrodes 100, and negative electrode active material layer 130 in bipolar electrode 100 adjacent to the one bipolar electrode 100, are facing each other.

Positive terminal electrode 200 is disposed on one side (upper side in Fig. 2) of plurality of bipolar electrodes 100 in a stacking direction (vertical direction in Fig. 2). Positive terminal electrode 200 has a positive electrode current collector foil 112, and positive electrode active material layer 120 provided on positive electrode current collector foil 112. The configuration of positive electrode current collector foil 112 and positive electrode active material layer 120 in positive terminal electrode 200 is the same as the configuration of the positive electrode current collector foil and positive electrode active material layer 120 in bipolar electrode 100.

Negative terminal electrode 300 is disposed on the other side (lower side in Fig. 2) of plurality of bipolar electrodes 100 in the stacking direction. Negative terminal electrode 300 has a negative electrode current collector foil 113, and negative electrode active material layer 130 provided on negative electrode current collector foil 113. The configuration of negative electrode current collector foil 113 and negative electrode active material layer 130 in negative terminal electrode 300 is the same as the configuration of the negative electrode current collector foil and negative electrode active material layer 130 in bipolar electrode 100.

Each separator 400 is disposed between each electrode, more specifically, between positive electrode active material layer 120 and negative electrode active material layer 130. Each separator 400 insulates between each electrode. Each separator 400 is made of an insulating material, and allows the permeation of ions. A polyolefin microporous film or the like is provided as separator 400.

Sealing portion 500 seals a region formed between each electrode. An electrolyte solution is filled in this region. Sealing portion 500 is made of an insulating material. Sealing portion 500 holds a peripheral edge portion of current collector 110 in each bipolar electrode 100, a peripheral edge portion of positive electrode current collector foil 112 in positive terminal electrode 200, a peripheral edge portion of negative electrode current collector foil 113 in negative terminal electrode 300, and a peripheral edge portion of each separator 400.

Positive electrode current collector plate 620 is disposed outside (upper side in Fig. 2) positive terminal electrode 200 in the stacking direction. Positive electrode current collector plate 620 is disposed to be stacked on positive terminal electrode 200 so as to make contact via a positive electrode side conductive adhesive material 720 with a surface of positive terminal electrode 200 on an opposite side to a surface facing bipolar electrode 100 in the stacking direction. Positive electrode current collector plate 620 has a current collector plate body 621 and a positive electrode side voltage detection portion 622.

Current collector plate body 621 is formed in a rectangular shape. As shown in Fig. 1, the external shape of current collector plate body 621 in a plan view is one size smaller than the external shape of sealing portion 500 in a plan view. The external shape of current collector plate body 621 in a plan view is the same or larger than a region overlapping positive electrode active material layer 120 and negative electrode active material layer 130 in the stacking direction.

Positive electrode side voltage detection portion 622 is a part where a voltmeter is connected. Positive electrode side voltage detection portion 622 has a shape that protrudes from current collector plate body 621 in a direction orthogonal to the stacking direction. As shown in Fig. 1 and Fig. 2, positive electrode side voltage detection portion 622 has a shape that overhangs outward more than an end portion of sealing portion 500 in a direction orthogonal to the stacking direction.

Positive electrode side conductive adhesive material 720 electrically connects positive terminal electrode 200 and positive electrode current collector plate 620. More specifically, positive electrode side conductive adhesive material 720 is provided between current collector plate body 621 and positive electrode current collector foil 112 in positive terminal electrode 200. Namely, positive electrode side voltage detection portion 622 is a part not overlapping positive electrode side conductive adhesive material 720 in the stacking direction. As shown in Fig. 2, positive electrode side conductive adhesive material 720 is at least provided at a region, of the external surface of positive electrode current collector foil 112 of positive terminal electrode 200 in the stacking direction, overlapping positive electrode active material layer 120 and negative electrode active material layer 130 in the stacking direction, and is preferably provided on the entire region of a region exposed from sealing portion 500.

Negative electrode current collector plate 630 is disposed outside (lower side in Fig. 2) negative terminal electrode 300 in the stacking direction. Negative electrode current collector plate 630 is disposed to be stacked on negative terminal electrode 300 so as to make contact via a negative electrode side conductive adhesive material 730 with a surface of negative terminal electrode 300 on an opposite side to a surface facing bipolar electrode 100 in the stacking direction. Negative electrode current collector plate 630 has a current collector plate body 631 and a negative electrode side voltage detection portion 632. Negative electrode side voltage detection portion 632 is a part where a voltmeter is connected. The structure of current collector plate body 631 and the structure of negative electrode side voltage detection portion 632 are substantially the same as the structure of current collector plate body 621 and the structure of positive electrode side voltage detection portion 622 in positive electrode current collector plate 620.

Negative electrode side conductive adhesive material 730 electrically connects negative terminal electrode 300 and negative electrode current collector plate 630. More specifically, negative electrode side conductive adhesive material 730 is provided between current collector plate body 631 and negative electrode current collector foil 113 in negative terminal electrode 300. Namely, negative electrode side voltage detection portion 632 is a part not overlapping negative electrode side conductive adhesive material 730 in the stacking direction. As shown in Fig. 2, negative electrode side conductive adhesive material 730 is at least provided at a region, of the external surface of negative electrode current collector foil 113 of negative terminal electrode 300 in the stacking direction, overlapping positive electrode active material layer 120 and negative electrode active material layer 130 in the stacking direction, and is preferably provided on the entire region of a region exposed from sealing portion 500.

Inner voltage detection portion 810 is electrically connected to current collector 110 in each bipolar electrode 100. Inner voltage detection portion 810 is drawn out to the outside of sealing portion 500. Inner voltage detection portion 810 protrudes, for example, from sealing portion 500 in a direction orthogonal to the stacking direction. Note that, there may be current collector 110 to which inner voltage detection portion 810 is not connected. The end portion of each inner voltage detection portion 810 may be held by a connector (illustration omitted).

Positive electrode side short circuit member 820 electrically connects positive terminal electrode 200 and positive electrode side voltage detection portion 622. More specifically, positive electrode side short circuit member 820 electrically connects positive electrode current collector foil 112 in positive terminal electrode 200 and positive electrode side voltage detection portion 622. Namely, one end of positive electrode side short circuit member 820 is connected to positive electrode current collector foil 112 in positive terminal electrode 200, and another end of positive electrode side short circuit member 820 is connected to positive electrode side voltage detection portion 622. Accordingly, for example, in the case where an end portion of each inner voltage detection portion 810 is held by the connector, the other end of positive electrode side short circuit member 820 is not connected to positive electrode side voltage detection portion 622, and enlargement of the connector in the stacking direction is avoided, compared to the case where the other end of positive electrode side short circuit member 820 is also held by the connector. A connection portion (the one end of positive electrode side short circuit member 820) between positive electrode side short circuit member 820 and positive electrode current collector foil 112 in positive terminal electrode 200 is covered by sealing portion 500. An electrical resistance between positive terminal electrode 200 and current collector body 621 of positive electrode current collector plate 620 via positive electrode side conductive adhesive material 720 is smaller than an electrical resistance between positive terminal electrode 200 and voltage detection portion 622 via positive electrode side short circuit member 820. The material, cross-sectional area and the like of positive electrode side short circuit member 820 are set, so as to achieve a relationship of such electrical resistances.

Negative electrode side short circuit member 830 electrically connects negative terminal electrode 300 and negative electrode side voltage detection portion 632. More specifically, negative electrode side short circuit member 830 electrically connects negative electrode current collector foil 113 in negative terminal electrode 300 and negative electrode side voltage detection portion 632. Namely, one end of negative electrode side short circuit member 830 is connected to negative electrode current collector foil 113 in negative terminal electrode 300, and another end of negative electrode side short circuit member 830 is connected to negative electrode side voltage detection portion 632. A connection portion (the one end of negative electrode side short circuit member 830) between negative electrode side short circuit member 830 and negative electrode current collector foil 113 in negative terminal electrode 300 is covered by sealing portion 500. An electrical resistance between negative terminal electrode 300 and current collector body 631 of negative electrode current collector plate 630 via negative electrode side conductive adhesive material 730 is smaller than an electrical resistance between negative terminal electrode 300 and voltage detection portion 632 via negative electrode side short circuit member 830. The material, cross-sectional area and the like of negative electrode side short circuit member 830 are set, so as to achieve a relationship of such electrical resistances.

As described above, in power storage module 1 in the present embodiment, since positive electrode side voltage detection portion 622 and positive terminal electrode 200, which are electrically connected by positive electrode side short circuit member 820, become a same potential as each other, and negative electrode side voltage detection portion 632 and negative terminal electrode 300, which are electrically connected by negative electrode side short circuit member 830, become a same potential as each other, a voltage of power storage module 1 can be measured, while suppressing a decrease in a measurement accuracy of a voltage, by measuring a voltage between positive electrode side voltage detection portion 622 and negative electrode side voltage detection portion 632.

In addition, for example, in the case where an abnormality (such as peeling of positive electrode side conductive adhesive material 720) occurs in a connection state between positive terminal electrode 200 and positive electrode current collector plate 620, since an electrical resistance between current collector plate body 621 and positive terminal electrode 200 increases, a current flowing through positive electrode side short circuit member 820 increases rapidly. As a result of this, positive electrode side short circuit member 820 melts. Accordingly, it becomes possible to detect an abnormality of a connection state between positive terminal electrode 200 and positive electrode current collector plate 620, or a connection state between negative terminal electrode 300 and negative electrode current collector plate 630, by measuring a voltage between positive electrode side voltage detection portion 622 and negative electrode side voltage detection portion 632 in a state of providing positive electrode side short circuit member 820 and negative electrode side short circuit member 830.

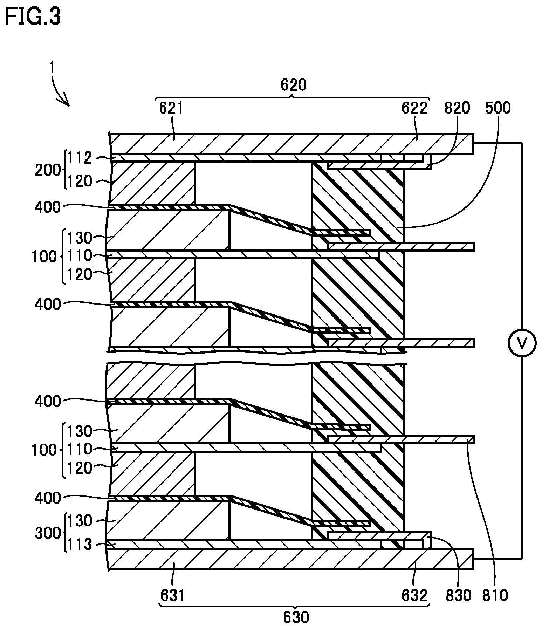

In the above embodiment, as shown in Fig. 3, positive electrode side conductive adhesive material 720 and negative electrode side conductive adhesive material 730 may be omitted. In this case, positive electrode current collector foil 112 in positive terminal electrode 200 is connected directly to positive electrode current collector plate 620, and negative electrode current collector foil 113 in negative terminal electrode 300 is connected directly to negative electrode current collector plate 630.

The above-stated exemplified embodiments and examples are understood by a person skilled in the art, with the following specific aspects.

A power storage module including
a plurality of mutually stacked bipolar electrodes,
a positive terminal electrode disposed on one side of the plurality of bipolar electrodes in a stacking direction of the plurality of bipolar electrodes,
a negative terminal electrode disposed on another side of the plurality of bipolar electrodes in the stacking direction,
a positive electrode current collector plate disposed to be stacked on the positive terminal electrode so as to make contact via a positive electrode side conductive adhesive material or directly with a surface of the positive terminal electrode on an opposite side to a surface facing the bipolar electrodes in the stacking direction, and electrically connected to the positive terminal electrode,
a negative electrode current collector plate disposed to be stacked on the negative terminal electrode so as to make contact via a negative electrode side conductive adhesive material or directly with a surface of the negative terminal electrode on an opposite side to a surface facing the bipolar electrodes in the stacking direction, and electrically connected to the negative terminal electrode,
a positive electrode side short circuit member with one end thereof connected to the positive terminal electrode and another end thereof connected to the positive electrode current collector plate, the positive electrode side short circuit member electrically connecting the positive terminal electrode and the positive electrode current collector plate, and
a negative electrode side short circuit member with one end thereof connected to the negative terminal electrode and another end thereof connected to the negative electrode current collector plate, the negative electrode side short circuit member electrically connecting the negative terminal electrode and the negative electrode current collector plate, in which
the positive electrode current collector plate has a positive electrode side voltage detection portion provided at a position not overlapping the positive terminal electrode in the stacking direction,
the other end of the positive electrode side short circuit member is connected to the positive electrode side voltage detection portion,
the negative electrode current collector plate has a negative electrode side voltage detection portion provided at a position not overlapping the negative terminal electrode in the stacking direction, and
the other end of the negative electrode side short circuit member is connected to the negative terminal electrode and the negative electrode side voltage detection portion.

In this power storage module, since the positive electrode side voltage detection portion and the positive terminal electrode, which are electrically connected by the positive electrode side short circuit member, become a same potential as each other, and the negative electrode side voltage detection portion and the negative terminal electrode, which are electrically connected by the negative electrode side short circuit member, become a same potential as each other, a decrease in a measurement accuracy of a voltage is suppressed, by measuring a voltage between the positive electrode side voltage detection portion and the negative electrode side voltage detection portion.

In addition, for example, in the case where an abnormality (such as peeling of the positive electrode side conductive adhesive material) occurs in a connection state between the positive terminal electrode and the positive electrode current collector plate, since an electrical resistance between the positive electrode current collector plate and the positive terminal electrode increases, a current flowing through the positive electrode side short circuit member increases rapidly. Accordingly, it becomes possible to detect an abnormality of a connection state between the positive terminal electrode and the positive electrode current collector plate, or a connection state between the negative terminal electrode and the negative electrode current collector plate, by measuring a voltage between the positive electrode side voltage detection portion and the negative electrode sidevoltage detection portion.

The power storage module described above, in which an electrical resistance between the positive terminal electrode and the positive electrode current collector plate in a contact region where the positive terminal electrode and the positive electrode current collector plate make contact via the positive electrode side conductive adhesive material or directly is lower than an electrical resistance between the positive terminal electrode and the positive electrode side voltage detection portion via the positive electrode side short circuit member, and
an electrical resistance between the negative terminal electrode and the negative electrode current collector plate in a contact region where the negative terminal electrode and the negative electrode current collector plate make contact via the negative electrode side conductive adhesive material or directly is lower than an electrical resistance between the negative terminal electrode and the negative electrode side voltage detection portion via the negative electrode side short circuit member.

In this aspect, since a current flowing through the positive electrode side short circuit member and the negative electrode side short circuit member is reduced, a decrease in a measurement accuracy of a voltage between the positive electrode side voltage detection portion and the negative electrode side voltage detection portion is more surely suppressed.

Although the embodiments of the present disclosure have been described, the embodiments disclosed this time should be considered as illustrative in all aspects and not limiting. The scope of the present disclosure is indicated by the claims.

## Claims

1. A power storage module (1), comprising:
a plurality of mutually stacked bipolar electrodes (100);
a positive terminal electrode (200) disposed on one side of the plurality of bipolar electrodes in a stacking direction of the plurality of bipolar electrodes;
a negative terminal electrode (300) disposed on another side of the plurality of bipolar electrodes in the stacking direction;
a positive electrode current collector plate (620) disposed to be stacked on the positive terminal electrode so as to make contact via a positive electrode side conductive adhesive material (720) or directly with a surface of the positive terminal electrode on an opposite side to a surface facing the bipolar electrodes in the stacking direction, and electrically connected to the positive terminal electrode;
a negative electrode current collector plate (630) disposed to be stacked on the negative terminal electrode so as to make contact via a negative electrode side conductive adhesive material (730) or directly with a surface of the negative terminal electrode on an opposite side to a surface facing the bipolar electrodes in the stacking direction, and electrically connected to the negative terminal electrode;
a positive electrode side short circuit member (820) with one end thereof connected to the positive terminal electrode and another end thereof connected to the positive electrode current collector plate, the positive electrode side short circuit member (820) electrically connecting the positive terminal electrode and the positive electrode current collector plate; and
a negative electrode side short circuit member (830) with one end thereof connected to the negative terminal electrode and another end thereof connected to the negative electrode current collector plate, the negative electrode side short circuit member (830) electrically connecting the negative terminal electrode and the negative electrode current collector plate, wherein
the positive electrode current collector plate has a positive electrode side voltage detection portion (622) provided at a position not overlapping the positive terminal electrode in the stacking direction,
the other end of the positive electrode side short circuit member is connected to the positive electrode side voltage detection portion,
the negative electrode current collector plate has a negative electrode side voltage detection portion (632) provided at a position not overlapping the negative terminal electrode in the stacking direction,
the other end of the negative electrode side short circuit member is connected to the negative electrode side voltage detection portion,
an electrical resistance between the positive terminal electrode (200) and the positive electrode current collector plate (620) in a contact region where the positive terminal electrode and the positive electrode current collector plate make contact via the positive electrode side conductive adhesive material (720) or directly is lower than an electrical resistance between the positive terminal electrode and the positive electrode side voltage detection portion via the positive electrode side short circuit member (820), and
an electrical resistance between the negative terminal electrode (300) and the negative electrode current collector plate (630) in a contact region where the negative terminal electrode and the negative electrode current collector plate make contact via the negative electrode side conductive adhesive material (730) or directly is lower than an electrical resistance between the negative terminal electrode and the negative electrode side voltage detection portion via the negative electrode side short circuit member.

## Patentansprüche

1. Energiespeichermodul (1), umfassend:
eine Vielzahl von aufeinandergestapelten bipolaren Elektroden (100);
eine positive Klemmenelektrode (200), die auf einer Seite der Vielzahl von bipolaren Elektroden in einer Stapelrichtung der Vielzahl von bipolaren Elektroden angeordnet ist;
eine negative Klemmenelektrode (300), die auf einer anderen Seite der Vielzahl von bipolaren Elektroden in der Stapelrichtung angeordnet ist;
eine Stromabnehmerplatte der positiven Elektrode (620), die angeordnet ist, um auf die positive Klemmenelektrode gestapelt zu werden, um über ein leitfähiges Klebstoffmaterial auf der Seite der positiven Elektrode (720) oder direkt mit einer Oberfläche der positiven Klemmenelektrode auf einer Seite, die entgegengesetzt zu einer Oberfläche ist, die den bipolaren Elektroden in der Stapelrichtung zugewandt ist, in Kontakt zu treten, und die mit der positiven Klemmenelektrode elektrisch verbunden ist;
eine Stromabnehmerplatte der negativen Elektrode (630), die angeordnet ist, um auf die negative Klemmenelektrode gestapelt zu werden, um über ein leitfähiges Klebstoffmaterial auf der Seite der negativen Elektrode (730) oder direkt mit einer Oberfläche der negativen Klemmenelektrode auf einer Seite, die entgegengesetzt zu einer Oberfläche ist, die den bipolaren Elektroden in der Stapelrichtung zugewandt ist, in Kontakt zu treten, und die mit der negativen Klemmenelektrode elektrisch verbunden ist;
ein Kurzschlusselement auf der Seite der positiven Elektrode (820), wobei ein Ende davon mit der positiven Klemmenelektrode und ein anderes Ende davon mit der Stromabnehmerplatte der positiven Elektrode verbunden ist, wobei das Kurzschlusselement auf der Seite der positiven Elektrode (820) die positive Klemmenelektrode mit der Stromabnehmerplatte der positiven Elektrode elektrisch verbindet, und
ein Kurzschlusselement auf der Seite der negativen Elektrode (830), wobei ein Ende davon mit der negativen Klemmenelektrode und ein anderes Ende davon mit der Stromabnehmerplatte der negativen Elektrode verbunden ist, wobei das Kurzschlusselement auf der Seite der negativen Elektrode (830) die negative Klemmenelektrode mit der Stromabnehmerplatte der negativen Elektrode elektrisch verbindet, wobei
die Stromabnehmerplatte der positiven Elektrode einen Spannungserkennungsabschnitt auf der Seite der positiven Elektrode (622) aufweist, der an einer Position bereitgestellt wird, die sich in der Stapelrichtung nicht mit der positiven Klemmenelektrode überschneidet,
das andere Ende des Kurzschlusselements auf der Seite der positiven Elektrode mit dem Spannungserkennungsabschnitt auf der Seite der positiven Elektrode verbunden ist,
die Stromabnehmerplatte der negativen Elektrode einen Spannungserkennungsabschnitt auf der Seite der negativen Elektrode (632) aufweist, der an einer Position bereitgestellt wird, die sich in der Stapelrichtung nicht mit der negativen Klemmenelektrode überschneidet,
das andere Ende des Kurzschlusselements auf der Seite der negativen Elektrode mit dem Spannungserkennungsabschnitt auf der Seite der negativen Elektrode verbunden ist,
einen elektrischen Widerstand zwischen der positiven Klemmenelektrode (200) und der Stromabnehmerplatte der positiven Elektrode (620) in einem Kontaktgebiet, in dem die positive Klemmenelektrode und die Stromabnehmerplatte der positiven Elektrode über das leitfähige Klebstoffmaterial auf der Seite der positiven Elektrode (720) in einem Kontakt stehen, oder der direkt niedriger als ein elektrischer Widerstand zwischen der positiven Klemmenelektrode und dem Spannungserkennungsabschnitt auf der Seite der positiven Elektrode über das Kurzschlusselement auf der Seite der positiven Elektrode (820) ist, und
einen elektrischen Widerstand zwischen der negativen Klemmenelektrode (300) und der Stromabnehmerplatte der negativen Elektrode (630) in einem Kontaktgebiet, in dem die negative Klemmenelektrode und die Stromabnehmerplatte der negativen Elektrode über das leitfähige Klebstoffmaterial auf der Seite der negativen Elektrode (730) in einem Kontakt stehen, oder der direkt niedriger als ein elektrischer Widerstand zwischen der negativen Klemmenelektrode und dem Spannungserkennungsabschnitt auf der Seite der negativen Elektrode über das Kurzschlusselement auf der Seite der negativen Elektrode ist.

## Revendications

1. Dispositif de stockage d'énergie (1), comprenant :
une pluralité d'électrodes bipolaires (100) empilées les unes sur les autres ;
une électrode de borne positive (200) disposée sur un côté de la pluralité d'électrodes bipolaires dans une direction d'empilage de la pluralité d'électrodes bipolaires ;
une électrode de borne négative (300) disposée sur un autre côté de la pluralité d'électrodes bipolaires dans la direction d'empilage ;
une plaque collectrice de courant d'électrode positive (620) disposée pour être empilée sur l'électrode de borne positive de manière à établir un contact par l'intermédiaire d'un matériau adhésif conducteur côté électrode positive (720) ou directement avec une surface de l'électrode de borne positive sur un côté opposé à une surface faisant face aux électrodes bipolaires dans la direction d'empilage, et connectée électriquement à l'électrode de borne positive ;
une plaque collectrice de courant d'électrode négative (630) disposée pour être empilée sur l'électrode de borne négative de manière à établir un contact par l'intermédiaire d'un matériau adhésif conducteur côté électrode négative (730) ou directement avec une surface de l'électrode de borne négative sur un côté opposé à une surface faisant face aux électrodes bipolaires dans la direction d'empilage, et connectée électriquement à l'électrode de borne négative ;
un élément de court-circuit côté électrode positive (820) dont une extrémité est connectée à l'électrode de borne positive et une autre extrémité est connectée à la plaque collectrice de courant d'électrode positive, l'élément de court-circuit côté électrode positive (820) connectant électriquement l'électrode de borne positive et la plaque collectrice de courant d'électrode positive ; et
un élément de court-circuit côté électrode négative (830) dont une extrémité est connectée à l'électrode de borne négative et une autre extrémité est connectée à la plaque collectrice de courant d'électrode négative, l'élément de court-circuit côté électrode négative (830) connectant électriquement l'électrode de borne négative et la plaque collectrice de courant d'électrode négative, dans lequel la plaque collectrice de courant d'électrode positive possède une partie de détection de tension côté électrode positive (622) fournie à une position qui ne chevauche pas l'électrode de borne positive dans la direction d'empilage,
l'autre extrémité de l'élément de court-circuit côté électrode positive est connectée à la partie de détection de tension côté électrode positive,
la plaque collectrice de courant d'électrode négative possède une partie de détection de tension côté électrode négative (632) fournie à une position qui ne chevauche pas l'électrode de borne négative dans la direction d'empilage,
l'autre extrémité de l'élément de court-circuit côté électrode négative est connectée à la partie de détection de tension côté électrode négative,
une résistance électrique entre l'électrode de borne positive (200) et la plaque collectrice de courant d'électrode positive (620) dans une région de contact où l'électrode de borne positive et la plaque collectrice de courant d'électrode positive entrent en contact par l'intermédiaire du matériau adhésif conducteur côté électrode positive (720) ou directement est inférieure à une résistance électrique entre l'électrode de borne positive et la partie de détection de tension côté électrode positive par l'intermédiaire de l'élément de court-circuit côté électrode positive (820), et
une résistance électrique entre l'électrode de borne négative (300) et la plaque collectrice de courant d'électrode négative (630) dans une région de contact où l'électrode de borne négative et la plaque collectrice de courant d'électrode négative entrent en contact par l'intermédiaire du matériau adhésif conducteur côté électrode négative (730) ou directement est inférieure à une résistance électrique entre l'électrode de borne négative et la partie de détection de tension côté électrode négative par l'intermédiaire de l'élément de court-circuit côté électrode négative.
